# EUROPÄISCHE PATENTANMELDUNG

(11) **EP 2 254 212 A2**
(43) Veröffentlichungstag der Anmeldung: **24.11.2010**
(21) Anmeldenummer: 10405096.8
(22) Anmeldetag: 06.05.2010
(51) Int. Cl.: H02G 3/08, H02G 3/12

(54) **Geräteträger für Befestigungen an einer thermisch zu isolierenden Bauwerskoberfläche**

(30) Priorität: 22.05.2009 CH 7902009
(71) Anmelder: Blaser, Robert, 9214 Kradolf (CH)
(72) Erfinder: Blaser, Robert, 9214 Kradolf (CH)
(74) Vertreter: Quehl, Horst Max

(57) **Zusammenfassung**

Der Geräteträger für Befestigungen an einer thermisch zu isolierenden Bauwerksoberfläche hat ein äusseres Trägerelement (4), dessen Materialeigenschaften denjenigen einer Bauwerksisolation entsprechen und ein mit diesem lückenlos festverbundenes, inneres Trägerelement (5), das aus einem thermisch isolierenden Material mit höherer Dichte und Zähigkeit besteht. Das innere Trägerelement (5) schliesst in sich einen inneren Hohlkörper (2) aus einem mechanisch höher belastbaren Material ein. Der Geräteträger (1) ist mit geringem Arbeitsaufwand im Bereich eines elektrischen Kabelrohres an einer Bauwerksoberfläche (3) montierbar, bietet in seinem Bereich eine gute, Kältebrücken vermeidende thermische Isolation und kann verhältnismässig grosse Kräfte von einem Gerät auf die Bauwerksoberfläche übertragen. Durch die einfache Form der Aussenkontur des Geräteträgers (1) wird ein lückenloser Anschluss von Isolationsplatten einer Bauwerksisolation ermöglicht.

## Beschreibung

Die Erfindung betrifft einen Geräteträger für die Befestigung eines einen bauwerksseitigen elektrischen Anschluss aufweisenden Gerätes an einer thermisch zu isolierenden Bauwerksoberfläche sowie Verfahren zur Herstellung und Montage eines solchen Geräteträgers.

Wenn an einem thermisch zu isolierenden Bauwerk ein äusseren Kräften ausgesetztes, einen elektrischen Anschluss benötigendes Gerät, wie z.B. eine elektrischen Steckdose, ein Schalter, eine Lampe, eine Satellitenschüssel, eine Überwachungskamera o. dgl. befestigt werden soll, ergibt sich das Problem, dass das an der Bauwerksoberfläche zu befestigende, dickschichtige Isoliermaterial keine ausreichende Festigkeit aufweist, um als ausreichender Verankerungsgrund für übliche Befestigungsmittel zu dienen.

Die bekannte Verwendung langschaftiger Dübelhülsen mit entsprechend langen Befestigungsschrauben, um die üblicherweise bis zu 20 cm dicke Isoliermaterialschicht überbrücken zu können, hat u.a. den Nachteil, dass diese aufgrund ihrer grossen Biegelänge keine grösseren Querkräfte übertragen können

Für die Befestigung von Lichtschaltern oder Steckdosen im Bereich von isolierten Bauwerksoberflächen sind in der Patentliteratur z.B. durch die DE3148113, die EP0710751 oder die EP1422800, auch als elektrische Installationsdosen bezeichnete Einbaudosen bekannt, die durch aufwendige, zusätzliche Bauteile die durch die Bauwerksisolation gegebene unterschiedliche Distanz bis zur festen inneren Bauwerksoberfläche überbrücken sollen. Sie haben jedoch den weiteren Nachteil, dass sie keine grösseren Querkräfte aufnehmen können und ihre Montage arbeitsaufwendig ist, indem ihre z.B. plattenförmige Basis mittels Spreizdübeln im festen Bauwerk zu befestigen ist, ihre Länge an die Dicke von thermischen Isolierplatten anzupassen ist und letztere zur Anpassung an die Aussenform solcher Geräteträger zurecht geschnitten werden müssen. Eine Hohlräume vermeidende Anpassung an das angrenzende Isoliermaterial des Bauwerkes ist dabei nur schwer und unvollkommen möglich. Ihre verhältnismässig kleine Basisplatte für die Befestigung an einer Bauwerksoberfläche kann dazu führen, dass Ungenauigkeiten der Bauwerksoberfläche zur Schrägstellung des Geräteträgers führen, falls nicht mit grossem Mehraufwand der betreffende Oberflächenbereich egalisiert wird. Ein weiterer Nachteil besteht darin, dass im Bereich solcher Geräteträger die Wärmeisolation im Wesentlichen unterbrochen ist, da eine ausreichende Festigkeit des Materials solcher Geräteträger mit guten thermischen lsolationseigenschaften nicht vereinbar ist. Die somit dort gegebenen Kältebrücken führen zur Ansammlung von Kondenswasser in den Hohlräumen, innerhalb und am Umfang des Geräteträgers, mit entsprechend z.B. durch Korrosion zu erwartenden Schäden in diesem mit elektrischen Kontakten versehenen heiklen Bereich.

Um mehrere solcher Geräte, wie z.B. mehrere Steckdosen und Lichtschalter nebeneinander anzuordnen, sind ausserdem zusätzliche Halterungsmittel vorzusehen, die mehrere Einbaudosen in ihrer Position zueinander vorfixieren. Ein Beispiel hierfür ist durch die EP 0408514 bekannt.

Der Erfindung liegt die Aufgabe zugrunde, einen Geräteträger der genannten Art zu finden, der die dargelegten Nachteile bekannter Ausführungen vermeidet und der somit mit geringem Arbeitsaufwand, genau ausgerichtet, fest montierbar ist, der die Anpassungsarbeiten für angrenzend zu montierende lsolierstoffplatten vereinfacht und der keine wesentliche Verschlechterung der Wärmeisolation in seinem Bereich mit sich bringt und insbesondere Kältebrücken vermeidet.

Die Lösung dieser Aufgabe erfolgt erfindungsgemäss aufgrund der Merkmale des Patentanspruchs 1. Vorteilhafte Ausführungsformen der Erfindung sind Gegenstand der abhängigen Patentansprüche und werden im Folgenden anhand der Zeichnungen näher erläutert. Es zeigt:
Fig.1 eine Ansicht der Aussenseite einer ersten Ausführungsform eines erfindungsgemässen Geräteträgers,
Fig.2 einen Querschnitt des Geräteträgers nach Fig.1 vor seiner Montage an einer Bauwerksoberfläche,
Fig.3 einen Querschnitt durch zwei Schichten eines anderen erfindungsgemässen Geräteträgers vor deren Verbindung miteinander und
Fig.4 eine perspektivische Darstellung der Aussenschicht des Geräteträgers nach Fig.3.

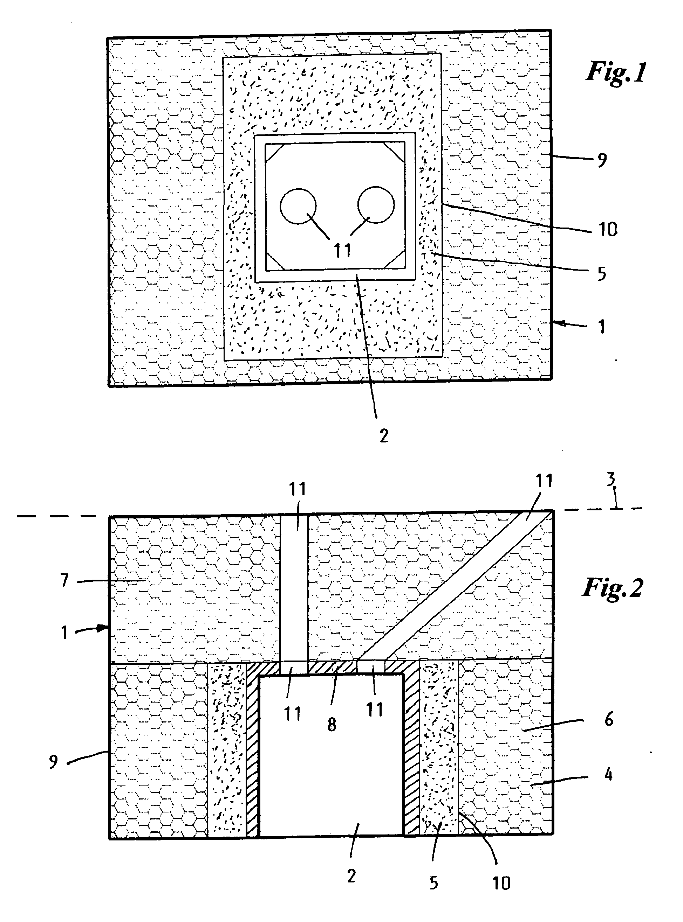

Das dargestellte Ausführungsbeispiel der Erfindung zeigt einen Geräteträger 1 in Anwendung für die Distanzbefestigung einer üblichen elektrischen Einbaudose 2 relativ zu einer festen Bauwerksoberfläche, die in Fig.2 durch die Strichlinie 3 angedeutet ist Diese Einbaudose 2 bzw. elektrische Installationsdose 2 bildet den Gehäuseteil und damit den Gerätehalter eines nicht dargestellten Gerätes, wie z.B. einer elektrischen Steckdose oder eines Lichtschalters.

Die einen inneren, vorgeformten Hohlkörper des Geräteträgers 1 bildende Einbaudose 2 z.B. entsprechend einer handelsüblichen und standardisierten Ausführung ist entsprechend dem dargestellten Ausführungsbeispiel, mit Ausnahme ihrer offenen Seite, vollständig, fest und lückenlos in dem aus thermisch isolierenden Material bestehenden Geräteträger 1 eingeschlossen, so dass dieser auf das befestigte Gerät einwirkende Kräfte, z.B. aufgrund einer parallel zur Bauwerksoberfläche 3 gerichteten Zugkraft an einem an der Steckdose angeschlossenen Kabel, durch seine Befestigung an der Bauwerksoberfläche 3, an diese übertragen kann.

Obgleich durch den lückenlosen, festen Einschluss in dem Material des Geräteträgers 1, die auf den inneren Gerätehalter, d.h. die Installationsdose 2 über ihre Aussenfläche weitergeleiteten Kräfte, zu einer entsprechend verringerten Materialbelastung pro Flächeneinheit führen, können diese dennoch zu einer mechanischen Überlastung eines porigen Isolationsmaterials des Geräteträgers 1 führen. Aus diesem Grund ist zwischen dem Gerätehalter bzw. der Installationsdose 2 und einem äusseren Trägerelement 4 ein inneres Trägerelement 5 vorgesehen. Dieses besteht ebenfalls aus einem thermisch gut isolierenden Material, jedoch hat dieses durch seine Feinporigkeit eine wesentlich höhere Festigkeit bzw. Dichte und Zähigkeit als das für die Gebäudeisolation und das äussere Trägerelement 4 vorgesehene Isoliermaterial.

Als Material für das äussere Trägerelement 4 eignet sich beispielsweise das für Gebäudeisolationen verwendete expandierte Polystyrol ("EPS"), bekannt unter dem Markennamen Styropor, während für das die Verbindung zu dem inneren Gerätehalter bzw. zu der Installationsdose 2 herstellende Isoliermaterial Polyurethan-Hartschaum vorgeschlagen wird, der z.B. auf eine Dichte im Bereich von 120 bis 200 kg/m3 eingestellt worden ist. Für Gebäudeisolationen verwendete und folglich für die Herstellung von Teilen (6,7) eines erfindungsgemässen Geräteträgers 1 geeignete Schaumstoffplatten sind in verschiedenen Dicken im Fachhandel erhältlich.

Der Geräteträger 1 besteht in bevorzugter Ausführungsform der Erfindung aus zwei fest miteinander verbundenen Schichten 6 und 7. Eine der Gebäudeoberfläche 3 abgekehrte Aussenschicht 6 beinhaltet die Trägerelemente 4 und 5 sowie die darin eingeschlossene Einbaudose 2, so dass ihre Dicke von z.B. 70 mm der Tiefe der Einbaudose 2 entspricht. Mit dieser aus somit fest miteinander verbundenen Teilen 2,4 und 5 bestehenden Aussenschicht 6 ist eine für die unmittelbare Befestigung an der Gebäudeoberfläche 3 vorgesehene Innenschicht 7, z.B. durch Kleben entlang der Fläche 12, fest verbunden. Sie besteht aus einem einheitlichen Isoliermaterial, dessen Qualität derjenigen der thermischen Gebäudeisolation entspricht. Da sie an die Bodenwand 8 der Einbaudose 2 angrenzt, bildet sie für diesen auch einen thermisch gut isolierenden Abstandshalter.

Die Grösse und Form dieses für die Ausbildung des inneren Trägerelementes 5 herzustellenden Ausschnittes entsprechend seiner Aussenkontur 10 kann unter Berücksichtigung der jeweiligen Festigkeitsanforderungen und auch der Kosten für das teurere Material des inneren Trägerelementes 5 unterschiedlich gewählt werden, jedoch soll die Gesamtgrösse des Geräteträgers 1 gegenüber der Grösse von angrenzend zu montierenden Schaumstoffplatten einer Gebäudeisolation wesentlich kleiner sein.

Im Falle, dass für die aus üblichem expandiertem Polystyrol (Styropor) bestehende Gebäudeisolation eine zusätzliche äussere Verkleidungsschicht z.B. aus Steinwolle vorgesehen sein soll, so empfiehlt sich, zur Vermeidung möglicher optischer Ungleichmässigkeiten, eine solche relativ dünne Verkleidungsschicht über das äussere und innere Trägerelement 4,5 hinweg bis an einen in diesem Fall nach aussen überstehenden Umfangsbereich der Einbaudose 2 heranzuführen, so dass das eine andere Materialkonsistenz aufweisende innere Trägerelement 5 hinter der Steinwolleschicht eingeschlossen ist.

Der Geräteträger 1 entsprechend dem dargestellten Ausführungsbeispiel im technischen Bereich von Elektroinstallationen 1 ist für die Anlieferung und Handhabung durch den Elektroinstallateur bestimmt und soll somit handlich sein und möglichst wenig Lager- und Transportvolumen in Anspruch nehmen. Eine geeignete Grösse einer längsten Seitenabmessung des Geräteträgers 1 liegt vorzugsweise im Bereich von von 200 bis 250 mm. Für die Herstellung des Geräteträgers 1 wird beim zuvor beschriebenen Ausführungsbeispiel als Ausgangsmaterial eine 70 mm dicke, auf die Aussenkontur 9 des Geräteträgers 1 zurecht geschnittene Schaumstoffplatte aus dem gleichen Material verwendet, wie es für die gesamte Gebäudeisolation vorgesehen ist oder für eine solche üblich ist. Anschliessend wird in diese Schaumstoffplatte ein Ausschnitt eingearbeitet, der der Aussenkontur 10 des anschliessend herzustellenden inneren Trägerelementes 5 entspricht.

Die Aussenkontur 10 des inneren Trägerelementes 5 kann z.B. mit Abstand dem Umfang der Installationsdose 2 folgend, kreisrund ausgeführt sein. Sie kann jedoch z.B. auch quadratisch oder entsprechend dem zeichnerisch dargestellten Ausführungsbeispiel rechteckig sein, um z.B. Eckbereiche für eventuelle Dübelbefestigungen im inneren Trägerelement 5 zu schaffen. Die Herstellung dieses Ausschnittes kann mit Hilfe einem für dieses Material üblichen Heissschneidegerätes oder mittels eines einen Wasserstrahl verwendenden Schneidgerätes erfolgen.

Anschliessend wird dieser somit eine durchgehende Öffnung aufweisende Block auf eine Formplatte fest und dicht aufgelegt, so dass sie den Ausschnitt einseitig schliesst. Nach Einlegen der Einbaudose 2 oder eines entsprechenden inneren Hohlkörpers zentral in diese Öffnung wird in dieser das innere Trägerelement 5 in Giesstechnik ausgeformt, so dass es sich mit dem Material des äusseren Trägerelementes 6 und demjenigen des inneren Gerätehalters 2 verschweisst und somit fest verbindet.

Nach Aushärtung des eingeschäumten Materials des inneren Trägerelementes 5 wird abschliessend zur Herstellung einer Innenschicht 6 des Geräteträgers 1 eine Isolierstoffplatte auf die Rückseite des auf diese Weise vorgeformten Geräteträgerteils aufgeklebt, deren Material demjenigen des äusseren Trägerelementes 6 entspricht und dessen Dicke so gewählt wird, dass die Gesamtdicke des Geräteträgers 1 derjenigen der anzuschliessendne Bauwerksisolation entspricht.

Diese somit zweischichtige Herstellung des Geräteträgers 1 hat auch den Vorteil, dass eine aufwendige Herstellung eines Sackloches für die Ausformung des inneren Trägerelementes 5 in einer dickeren Hartschaumplatte vermieden wird.

Für die Befestigung eines mit einem elektrischen Anschluss zu versehenden Gerätes, wie z.B. einer Steckdose, an einer thermisch zu isolierenden Bauwerksoberfläche mittels eines erfindungsgemässen Geräteträgers 1 wird in einem ersten Arbeitsschritt der Geräteträger 1 auf das freie Ende mindestens eines hierzu aus der Bauwerksoberfläche herausragenden Kabelrohrs gesteckt. Hierzu ist es erforderlich zuvor in einer Bodenwand 8 der Einbaudose 2 und der angrenzenden Innenschicht 7 einen dem Durchmesser des Kabelrohres entsprechenden Durchsteckkanal 11 einzuarbeiten. Dies kann durch einfaches Durchstossen erfolgen, wie es dem Elektroinstallateur in der Handhabung solcher marktüblichen Einbaudosen 2 an sich bekannt ist. Anschliessend kann der Geräteträger 1 an der Bauwerksoberfläche 3 durch Kleben befestigt werden, indem er entsprechend weiter über das Kabelrohr geschoben wird. Diese Arbeit kann durch einen Elektriker oder den Bauwerksisolateur ausgeführt werden, nachdem er den Geräteträger 1 vom Elektriker erhalten hat. Danach wird das freie Ende des Kabelrohres durch den Elektriker bündig mit der Innenfläche der Bodenwand 8 der Installationsdose 2 abgeschnitten, ein elektrisches Kabel eingezogen und die Steckdose oder ein anderes Gerät angeschlossen. Abschliessend wird die Gebäuseisolation fertig gestellt, wobei die Anpassung angrenzend zu befestigender Isolationsplatten aufgrund der einfach gestalteten Aussenkontur 9 des Geräteträgers 1 besonders einfach ausführbar ist.

Beim zuvor beschriebenen Ausführungsbeispiel der Erfindung findet die Einbaudose 2 bzw. ein von ihr aufgenommenes und in ihr befestigtes Gerät eine ausreichende Befestigung allein durch die verhältnismässig grossen Klebeflächen, über die der Geräteträger 1 mit der Bauwerksoberfläche 3 und der parallel zu dieser angrenzenden Bauwerksisolation verbunden ist.

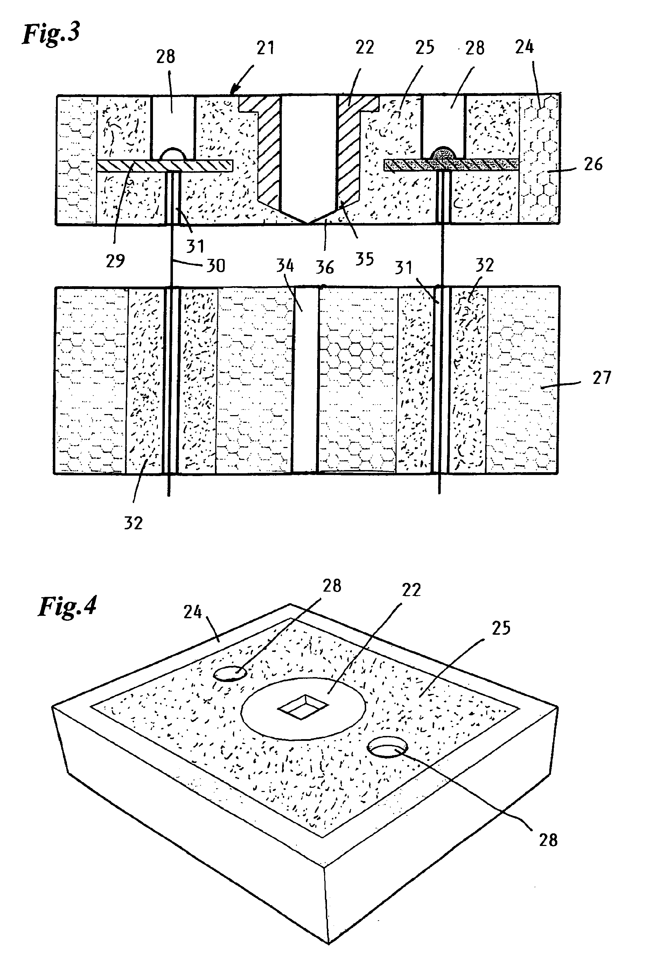

Für die Befestigung von besonders schweren Geräten, wie z.B. einer Satellittenantenne bzw. ihres Traggestells können die eine Klebeverbindung bildenden Befestigungsflächen in ihrer Grösse nicht ausreichend sein, so dass sich eine andere oder zusätzliche Befestigung des inneren Trägerelementes 5 durch eine Ankerverbindung mit dem zu isolierenden Bauwerk empfiehlt. Ein Ausführungsbeispiel eines auf solche Weise ausgeführten Geräteträgers 21 ist in den Fig.3 bis 5 dargestellt.

Der zu verankernde Geräteträger 21 ist ebenfalls vorzugweise zweischichtig aufgebaut und hat in einer Aussenschicht 26 einen vorzugsweisen zentral eingeschlossenen Hohlkörper 22, z.B. in Form eines sogenannten Lampendübels, ein diesen einschliessendes inneres Trägerelement 5 und ein letzteres einschliessendes äusseres Trägerelement 24.

In dem inneren Trägerelement 25 sind zwei Senklöcher 28 eingeformt, die sich durch eine gleichfalls versenkt eingeformte, der Verteilung von Spannkräften dienende, steife Ankerplatte 29 erstrecken. Diese besteht vorzugsweise aus Kunststoff, wie z.B. aus Phenolharz, könnte jedoch auch aus Blech geformt sein.

Für die Aufnahme von jeweils einem Ankerbolzen 30, der sich bis zu der Bauwerksoberfläche und in der Bauwerkswand vorbereitete, nichtdargestellte Dübel erstreckt, setzen sich diese Senklöcher 28 durch die Innenschicht 27 des Geräteträgers 21 hindurch in Form von dem Ankerdurchmesser angepassten Kanälen 31 fort.

Im Unterschied zum ersten Ausführungsbeispiel der Erfindung ist auch in der Innenschicht 27 jeweils, zumindest im Bereich der Ankerbolzen 30, ein Stützkörper 32 eingeformt, dessen Material mit demjenigen des inneren Trägerelementes 25 vergleichbar oder identisch ist. Diese Stützkörper 32 dienen der Aufnahme der Spannkräfte der Ankerbolzen 30, so dass diese fest verspannt werden können, ohne das Isoliermaterial der Innenschicht 27 zu komprimieren und sich eine hochbelastbare Befestigungsanordnung ergibt. Dabei wird vorzugsweise eine gleichmässige Anpressung und Ausrichtung des Geräteträgers 21 an der Bauwerksoberfläche durch zusätzliche, ausserhalb des Bereichs der Ankerbolzen 30 zu ersteren um 90 Grad versetzt .angeordnete Stützkörper aus gleichem isolierendem Kunststoffmaterial gewährleistet.

Zum Aufstecken eines solchen Geräteträgers 21 auf ein bis zum Lampendübel 22 zu führendes, aus der Bauwerksoberfäche herausragendes Kabelrohr, anlässlich der Montage des Geräteträgers 21 an der Bauwerksoberfläche, kann in der Innenschicht 27 für dieses ein Aufnahmekanal 34 vorgesehen sein, so dass diese nicht durchstossen werden muss. Stattdessen ist der innere Endbereich 35 des Lampendübels 22 durch eine dünne Wand 36 verschlossen, die aus dem Material des inneren Trägerelementes 25 geformt ist. Nach Durchstossen dieser Wand 36 anlässlich der Montage des Geräteträgers 21 legt sich diese manschettenartig um das hindurchgesteckte Kabelrohr, so dass die Handhabung des Geräteträgers 21 während seiner Ausrichtung und Verklebung an der Bauwerksoberfläche vereinfacht wird.

Nach Befestigung eines solchen Geräteträgers 21 mittels der Ankerbolzen 30 an einem Bauwerk werden in die Senklöcher 28 nichtdargestellte Verschlussstopfen aus einem Isoliermaterial eingedrückt, so dass in einer anschliessend aufgebrachten Verputzungsschicht des Bauwerkes an diesen Bereichen keine Markierungen oder Verfärbungen entstehen können.

## Patentansprüche

1. Geräteträger für die Befestigung von mindestens einem, einen bauwerksseitigen elektrischen Anschluss aufweisenden Gerät im Bereich einer thermisch zu isolierenden Bauwerksoberfläche (3), **gekennzeichnet durch** ein, parallel zur Ebene der Bauwerksoberfläche (3), äusseres Trägerelement (4,24), dessen Materialeigenschaften denjenigen der Bauwerksisolation entsprechen und ein mit diesem festverbundenes inneres Trägerelement (5,25), das aus einem Isoliermaterial mit relativ zu derjenigen des äusseren Trägerelementes (4,24) höheren Festigkeit besteht, wobei dieses innere Trägerelement (5,25) einen für die Aufnahme des elektrischen Anschlusses des Gerätes bestimmten inneren, aus Kunststoff vorgeformten Hohlkörper (2,22) fest und lückenlos umschliesst.

2. Geräteträger nach Anspruch 1, **dadurch gekennzeichnet, dass** er mehrschichtig aufgebaut ist, indem seine Aussenschicht (6,26 ) das äussere und innere Trägerelement (4,24; 5,25) sowie den inneren Hohlkörper (2,22) aufweist und seine Innenschicht (7,27) die für eine Verbindung mit der Bauwerksoberfläche (3) bestimmte Befestigungsfläche aufweist und aus einem Isoliermaterial besteht, das demjenigen des äusseren Trägerelementes (4,24) entspricht.

3. Geräteträger nach Anspruch 2, **dadurch gekennzeichnet, dass** die Innenschicht (7,27) auf die der Bauwerksoberfläche (3) zugekehrte Rückseite der Aussenschicht (6,26) aufgeklebt ist und ihre Dicke derart ausgewählt ist, dass die Gesamtdicke des Geräteträgers (1,21) derjenigen einer angrenzenden Bauwerksisolation entspricht.

4. Geräteträger nach Anspruch 2, **dadurch gekennzeichnet, dass** er die Form eines Plattenkörpers mit zueinander parallelen seitlichen Begrenzungsflächen (9) aufweist, die für eine Klebeverbindung mit einer angrenzenden Bauwerksisolation bestimmt sind.

5. Geräteträger nach Anspruch 2, **dadurch gekennzeichnet, dass** das innere Trägerelement (5,25) eine für die zusätzliche Verankerung von Schrauben oder Spreizdübeln geeignete Festigkeit aufweist und den Sockel für die Befestigung eines Gerätes bildet, wobei der innere Hohlkörper (2,22) einen für die Durchführung eines elektrischen Kabelrohres bemessenen Hohlraum bildet.

6. Geräteträger nach Anspruch 2, **dadurch gekennzeichnet, dass** das innere Trägerelement (5) mit dem inneren Hohlkörper (2) und dem äusseren Trägerelement (4) fest vergossen ist, indem es aus einem thermisch isolierenden Kunststoffmaterial besteht, das mit dem Material des Gerätehalters und demjenigen des äusseren Isolationskörpers verschweissbar ist.

7. Geräteträger nach Anspruch 2, **dadurch gekennzeichnet, dass** der innere Hohlkörper (2) aus mindestens einer Einbaudose (2) für elektrische Installationen besteht.

8. Geräteträger nach einem der Ansprüche 1 bis 7, **dadurch gekennzeichnet, dass** das äussere Trägerelement (4) aus expandiertem Polystyrol (Styropor) und das innere Trägerelement (5) aus Polyurethan-Hartschaum mit einem Gewicht zwischen 100 bis 200 kg/m³ besteht.

9. Geräteträger nach einem der Ansprüche 2 bis 8, **dadurch gekennzeichnet, dass** das innere Trägerelement (25) mittel in Senklöchern (28) angeordneten und sich durch die innere lsolationsschicht (27) bis in das Bauwerk erstreckende Ankerbolzen (30) befestigt ist.

10. Verfahren zur Montage eines Geräteträgers (1,21) nach Anspruch 1 oder 7, **dadurch gekennzeichnet, dass** in einem ersten Arbeitsschritt der Geräteträger (1,21) auf das freie Ende mindestens eines aus der Bauwerksoberfläche (3) herausragenden, für den Einschluss eines elektrischen Kabels bestimmten Kabelrohres gesteckt wird, indem hierzu in einer Bodenwand (8,34 des inneren Hohlkörpers (2,22) und der angrenzenden Innenschicht (7) ein dem Durchmesser des Kabelrohres entsprechender Durchsteckkanal (11,33) vorgesehen wird, anschliessend, verbunden mit seinem weiterem Aufschieben auf das mindestens eine Kabelrohr, der Geräteträger (1,21) an der Bauwerksoberfläche befestigt wird und abschliessend das freie Ende des Kabelrohres abgeschnitten wird.

11. Verfahren zur Herstellung eines Geräteträgers nach einem der Ansprüch 2 bis 9, **dadurch gekennzeichnet, dass** in einer Platte aus einem der Bauwerksisolation entsprechenden Material, zur Ausbildung des äusseren Trägerelementes (4,24), ein der Aussenkontur des inneren Trägerelementes (5,25) entsprechender Formraum ausgeschnitten wird, der somit gebildete Formrahmen zusammen mit dem inneren Hohlkörper (2,22) auf eine Formplatte gelegt wird, so dass das äussere Trägerelement (4,24) den inneren Hohlkörper (2,22) mit Abstand umschliesst und der durch diesen Abstand gebildete Zwischenraum zur Ausbildung des inneren Trägerelementes (5,25) mit einem Isoliermaterial ausgegossen wird, das eine höhere Festigkeit aufweist als dasjenige des äusseren Trägerelementes (4,24), so dass dieses Isoliermaterial einerseits mit dem Material des inneren Hohlkörpers (2,22) und anderseits mit dem Material des äusseren Trägerelementes (4,24) verschweisst und anschliessend parallel dazu eine für die Verbindung mit der Bauwerksoberfläche (3) bestimmte Innenschicht (7,27) aufgeklebt wird, die ein Isoliermaterial aufweist, das demjenigen des äusseren Trägerelementes (4,24) entspricht.
